# FASCICULE DE BREVET EUROPEEN

(11) **EP 0 867 607 B1**
(45) Date de publication et mention de la délivrance du brevet: **14.05.2003**
(21) Numéro de dépôt: 98400700.5
(22) Date de dépôt: 26.03.1998
(51) Int. Cl.: F02C 3/113, F02C 7/36

(54) **Groupe turbopropulseur double corps à regulation isodrome**
Zweiwellenturboproptriebwerk mit isodromischer Regulierung
Two-spool turboprop with isodromic regulation

(30) Priorité: 27.03.1997 FR 9703743
(43) Date de publication de la demande: 30.09.1998
(73) Titulaire: SNECMA MOTEURS, 75015 Paris (FR)
(72) Inventeur: Loisy, Jean Maurice, 77310 Ponthierry (FR)
(74) Mandataire: Berrou, Paul

(56) Documents cités:
- DE-A- 2 559 172
- FR-A- 2 197 111
- FR-A- 2 573 816
- GB-A- 1 411 380
- GB-A- 2 174 762

## Description

La présente invention concerne un groupe turbopropulseur double corps dont l'architecture est particulièrement adaptée à une régulation qui maintient constante la vitesse de rotation de l'hélice.

Les turbopropulseurs double corps classiques comportent généralement des groupes rotors de basse pression et de haute pression à rotation indépendante, chaque groupe comportant un compresseur et une turbine entraînant ce compresseur, le compresseur basse pression refoulant au moins en partie dans le compresseur haute pression et la turbine basse pression étant montée en série avec la turbine haute pression ; le groupe rotor basse pression est en outre relié à une hélice à pas variable pour l'entraîner (voir par exemple GB-A-2 174 762.).

Cette architecture est mal adaptée à une régulation qui maintient constante la vitesse de rotation de l'hélice car elle entraîne un risque de pompage du compresseur basse pression aux faibles régimes de fonctionnement du moteur. En effet, lorsque le débit d'alimentation en combustible du moteur est faible, par exemple lors de la descente de l'avion pour l'atterrissage , , la vitesse de rotation du compresseur haute pression est réduite alors que le compresseur basse pression continue de tourner à grande vitesse. Cette situation peut donner naissance à des conditions d'écoulement instables dans les compresseurs et le compresseur basse pression a tendance à pomper. Le but de l'invention est de résoudre ce problème et de réaliser un groupe turbopropulseur double corps d'architecture différente adaptée à une régulation qui maintient constante la vitesse de rotation de l'hélice sans entraîner un risque de pompage des compresseurs.

Pour cela, l'invention consiste à entraîner au moins une hélice par au moins le corps haute pression du générateur de gaz double corps du groupe turbopropulseur. Le terme hélice s'applique également aux hélices rapides connues sous le nom anglais de propfan.

Dans une telle architecture, aux bas régimes de fonctionnement du moteur, lorsque le régime du compresseur basse pression diminue et que le régime du compresseur haute pression reste constant, les charges du compresseur basse pression diminuent et les charges du compresseur haute pression diminuent aussi. Il n'y a donc pas de problème de pompage des compresseurs même en l'absence de géométrie variable sur ces compresseurs.

Selon l'invention, le groupe turbopropulseur double corps à régulation isodrome comportant un générateur de gaz double corps respectivement à basse et haute pression, et au moins une hélice, et chaque corps comprenant un compresseur et une turbine entraînant ce compresseur, est caractérisé en ce que l'hélice est entraînée au moins par le corps haute pression du générateur de gaz.

L'hélice peut être disposée à l'avant du turbopropulseur et en amont du générateur de gaz, ou bien être disposée entre les compresseurs basse et haute pression du générateur de gaz et autour d'un ensemble réducteur de vitesse.
Selon un premier mode de réalisation de l'invention, l'hélice est entraînée uniquement par le corps haute pression du générateur de gaz.
Selon un deuxième mode de réalisation de l'invention, l'hélice est remplacée par un doublet d'hélices contrarotatives entraînées respectivement par les corps haute et basse pression du générateur de gaz.
Selon un troisième mode de réalisation de l'invention, l'hélice est entraînée conjointement par les corps haute et basse pression du générateur de gaz par l'intermédiaire d'un ensemble réducteur répartiteur de couple.

D'autres particularités et avantages de l'invention apparaîtront clairement dans la suite de la description donnée à titre d'exemple non limitatif et faite en regard des figures annexées qui représentent :
- la figure 1, une demi-coupe longitudinale axiale d'un exemple d'architecture d'un groupe turbopropulseur comportant une hélice entraînée par le corps haute pression, selon un premier mode de réalisation de l'invention ;
- la figure 2, une première variante d'exécution d'un groupe turbopropulseur selon le premier mode de réalisation de l'invention ;
- la figure 3 une deuxième variante d'exécution d'un groupe turbopropulseur selon le premier mode de réalisation de l'invention ;
- la figure 4, une troisième variante d'exécution d'un groupe turbopropulseur selon le premier mode de réalisation de l'invention ;
- les figures 5a et 5b, une vue en coupe transversale et une demi-coupe longitudinale axiale d'un exemple de réalisation d'un ensemble réducteur planétaire pour le groupe turbopropulseur représenté sur la figure 4 ;
- la figure 6, une demi-coupe longitudinale axiale d'une variante de réalisation d'un ensemble réducteur planétaire pour le groupe turbopropulseur représenté sur la figure 4 ;
- la figure 7, une demi-coupe longitudinale axiale d'un exemple d'architecture d'un groupe turbopropulseur comportant un doublet d'hélices ou de prop-fan contrarotatifs à pas variable selon un deuxième mode de réalisation de l'invention ;
- la figure 8, une première variante d'exécution d'un groupe turbopropulseur selon le deuxième mode de réalisation de l'invention ;
- la figure 9, une deuxième variante d'exécution d'un groupe turbopropulseur, selon le deuxième mode de réalisation de l'invention ;
- la figure 10, une demi-coupe longitudinale axiale d'un exemple de réalisation d'un ensemble réducteur pour le groupe turbopropulseur représenté sur la figure 9 ;
- la figure 11, une demi-coupe longitudinale axiale d'un exemple d'architecture d'un groupe turbopropulseur comportant une hélice entraînée conjointement par les corps haute et basse pression, selon un troisième mode de réalisation de l'invention ;
- la figure 12, une première variante d'exécution d'un groupe turbopropulseur selon le troisième mode de réalisation de l'invention ;
- la figure 13, une demi-coupe longitudinale axiale d'un exemple de réalisation d'un ensemble réducteur répartiteur de couple pour le groupe turbopropulseur, représenté sur la figure 12 ;
- la figure 14, une variante d'exécution de l'ensemble réducteur répartiteur de couple pour le groupe turbopropulseur représenté sur la figure 12 ;
- la figure 15, une deuxième variante d'exécution d'un groupe turbopropulseur selon le troisième mode de réalisation de l'invention ;
- la figure 16 une demi-coupe longitudinale axiale d'un exemple de réalisation d'un ensemble réducteur répartiteur de couple pour le groupe turbopropulseur représenté sur la figure 15.

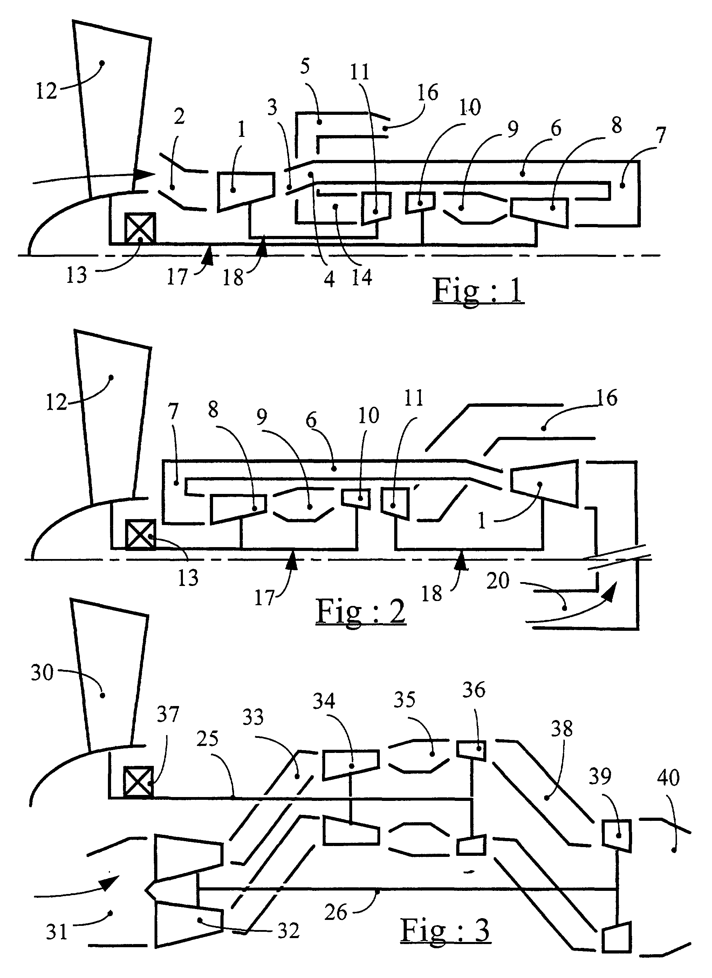

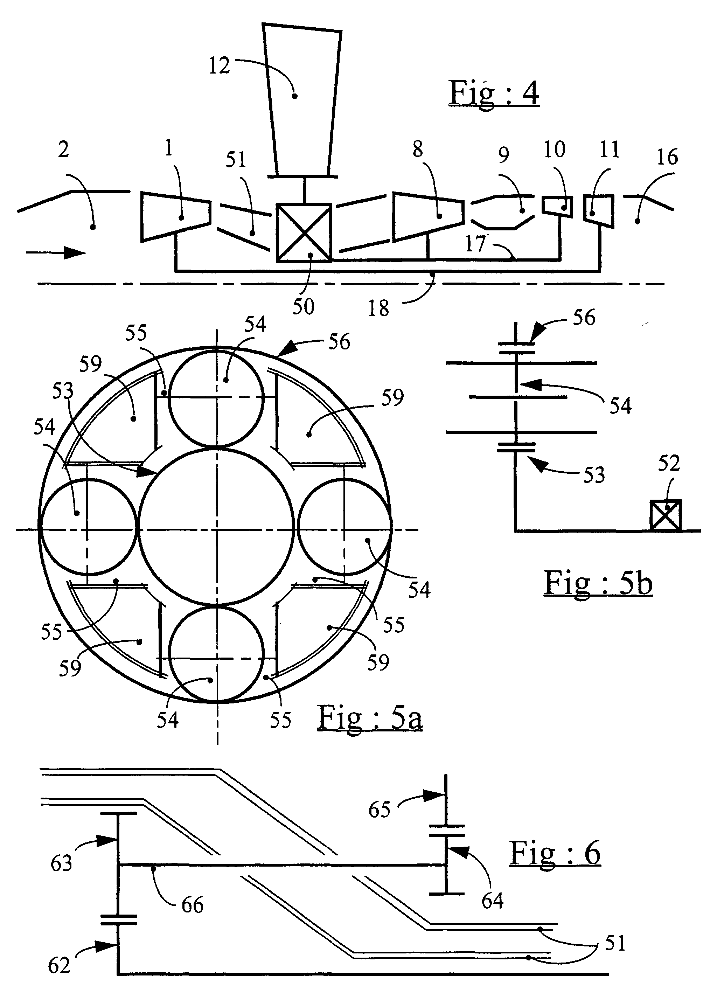

Selon un premier mode de réalisation de l'invention, les groupes turbopropulseurs double corps représentés schématiquement sur les figures 1 à 4 comportent une hélice, ou un propfan, à pas variable entraînée par le corps haute pression d'un générateur de gaz à double corps. Sur les figures 1 à 3 l'hélice est disposée à l'avant du moteur et en amont du générateur de gaz ; sur la figure 4, l'hélice est disposée autour du générateur de gaz. Ces structures présentent l'avantage de permettre de maintenir constante la vitesse de rotation de l'hélice et du corps haute pression sans risque de pompage des compresseurs même en l'absence de géométrie variable sur ces compresseurs.

Sur la figure 1, le générateur de gaz comporte un compresseur basse pression 1 relié à une entrée d'air annulaire 2. La sortie du compresseur basse pression est reliée à un canal 3 annulaire qui se divise ensuite en plusieurs canaux séparés 4 pour permettre le passage des tubes d'échappement des gaz 5( un seul tube est représenté sur la figure 1 pour des raisons de clarté). Les canaux séparés 4 se rejoignent ensuite pour former un nouveau canal annulaire 6 comportant un premier coude 7 en son extrémité aval reliée à un compresseur haute pression 8. Dans le premier coude 7, le sens de circulation du flux gazeux s'inverse de 180 degrés. En sortie du compresseur haute pression 8, l'air comprimé passe dans une chambre de combustion annulaire 9 qui alimente en gaz chauds les turbines 10, 11 d'entraînement des compresseurs, respectivement à haute pression et à basse pression. La turbine à haute pression 10 entraîne également l'hélice ou le propfan 12 par l'intermédiaire d'un réducteur de vitesse 13, ainsi que les équipements (non représentés) du moteur et de l'avion. Le réducteur est destiné à réduire la vitesse de rotation de l'hélice ou du propfan. La turbine basse pression est suivie d'un canal annulaire d'échappement des gaz 14 qui se divise ensuite en plusieurs tubes 5 (un seul tube est représenté sur la figure 1). Les tubes 5 croisent les canaux séparés 4 en effectuant un deuxième coude dans lequel le sens de circulation des gaz s'inverse à nouveau de 180 degrés. Les tubes 5 se rejoignent ensuite pour former une enceinte annulaire ou deux tuyères latérales 16 qui permettent l'éjection des gaz brûlés.

Sur cette figure 1, les arbres 17, 18 d'entraînement des corps haute pression et basse pression sont coaxiaux.
Les compresseurs basse pression et haute pression peuvent être éventuellement munis de stators à calage variable.

La figure 2 est une première variante d'exécution d'un groupe turbopropulseur de même architecture que celui représenté sur la figure 1. Sur cette figure 2, les éléments identiques à ceux représentés sur la figure 1 portent les mêmes références numériques. Dans cette variante, l'entrée d'air 20 du générateur de gaz n'est pas annulaire mais située sous la nacelle du turbopropulseur et le sens de circulation des gaz dans le générateur de gaz est inversé par rapport à la figure 1. La disposition géométrique du corps haute pression en amont du corps basse pression évite la traversée du corps basse pression par le corps haute pression et permet d'avoir un arbre haute pression plus court que le turbopropulseur représenté sur la figure 1.

La figure 3 représente une deuxième variante d'exécution d'un groupe turbopropulseur comportant une hélice, ou un propfan, 30 à pas variable entraînée par le corps haute pression d'un générateur de gaz à double corps.

Cette deuxième variante diffère des figures 1 et 2 par le fait que les arbres haute et basse pression 25, 26 qui entraînent respectivement les corps haute et basse pression ne sont pas coaxiaux. Par ailleurs, dans cette deuxième variante, l'écoulement des gaz ne subit aucune inversion de sens et s'effectue entre une entrée d'air 31 située à l'avant du moteur et une tuyère d'éjection 40 située à l'arrière du moteur.

Les éléments qui composent le générateur de gaz sont les mêmes que sur les figures 1 et 2.

Ces éléments sont constitués de compresseurs basse pression 32 et haute pression 34 éventuellement équipés de stators à calage variable et reliés entre eux par un canal annulaire 33 ; d'une chambre de combustion 35 annulaire; d'une turbine haute pression 36 qui entraîne le compresseur haute pression 34, l'hélice ou le propfan 30 par l'intermédiaire d'un réducteur 37, ainsi que les équipements non représentés du moteur et de l'avion ; d'une turbine basse pression 39 qui entraîne le compresseur basse pression, les turbines basse et haute pression étant reliées par un canal annulaire 38; et d'une tuyère d'éjection 40.

La figure 4 représente une troisième variante d'exécution d'un groupe turbopropulseur comportant une hélice, ou un propfan, 12 à pas variable entraînée par le corps haute pression d'un générateur de gaz à double corps.

Sur cette figure 4, l'hélice 12, ou le propfan, n'est pas disposée en amont du générateur de gaz comme dans les exemples représentés sur les figures 1 à 3, mais elle est située entre les compresseurs basse et haute pression 1, 8 et autour du réducteur 50. Le réducteur 50 est intégré dans un carter annulaire 51 localisé entre la sortie du compresseur basse pression 1 et l'entrée du compresseur haute pression 8. Les corps haute et basse pression sont coaxiaux. Tous les éléments qui composent le générateur de gaz sont les mêmes que ceux représentés sur les figures précédentes 1 et 2 et portent les mêmes références que sur ces figures 1 et 2.

Cette troisième variante permet de raccourcir la longueur de l'arbre haute pression 17 par rapport à l'architecture représentée sur la figure 1 bien que comme dans l'exemple représenté sur la figure 3, l'écoulement des gaz entre l'entrée d'air 2 et la tuyère 16 ne subisse aucune inversion de sens.

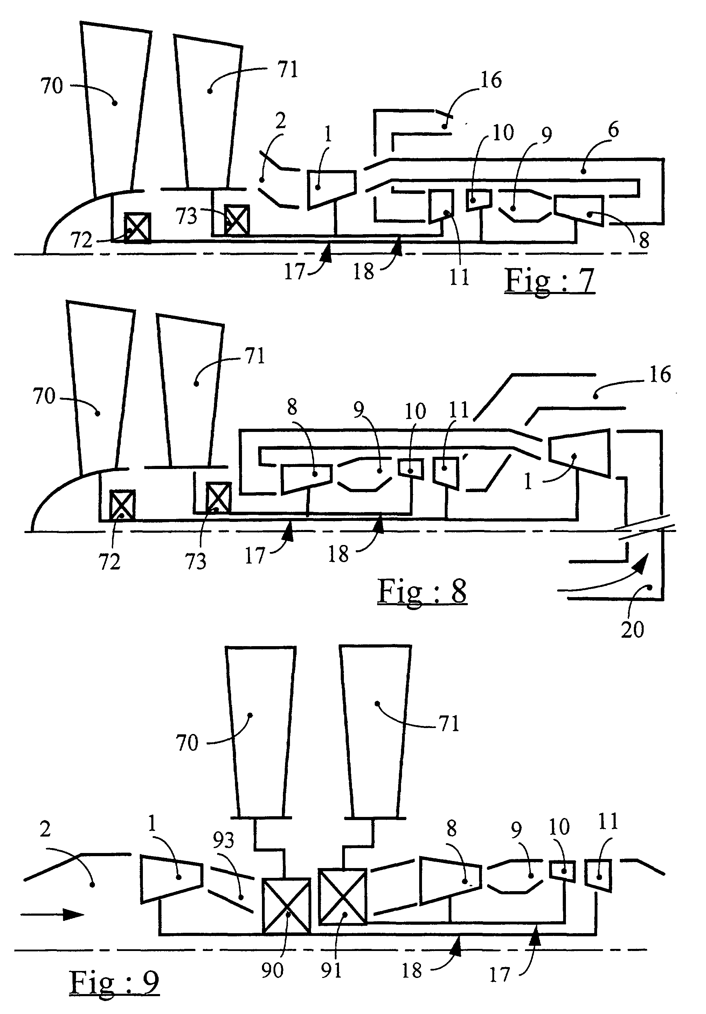

Cette troisième variante nécessite cependant un ensemble réducteur dont deux exemples de réalisation sont représentés sur les figures 5a, 5b et 6.

Sur les figures 5a et 5b, l'ensemble réducteur 50 intégré dans le carter annulaire 51 comporte un premier réducteur 52, planétaire ou epicycloïdal, entraîné en rotation par le corps haute pression du générateur de gaz. Ce premier réducteur 52 entraîne en rotation un planétaire 53. Des satellites 54 disposés dans des bras radiaux 55 du carter sont entraînés en rotation par le planétaire 53. Enfin, une couronne dentée 56 entraînée en rotation par les satellites 54 est solidaire de l'hélice 12.

Des canaux 59 situés entre les bras radiaux 55 permettent le transfert du flux d'air de la sortie du compresseur basse pression 1 à l'entrée du compresseur haute pression 8.

Une variante de réalisation de l'ensemble réducteur de vitesse est représentée sur la figure 6.

Cette variante se distingue de la figure 5 par l'utilisation de satellites doubles 63, 64 qui réalisent un rapport de réduction plus élevé qu'un seul satellite et permettent ainsi de s'affranchir d'un premier réducteur tel que le premier réducteur 52 de la figure 5.

L'ensemble réducteur de vitesse représenté sur la figure 6 comporte un planétaire 62 entraîné en rotation par le corps haute pression ; des premiers satellites 63 entraînés en rotation par le planétaire 62 et des deuxièmes satellites 64 liés aux premiers satellites 63 par des arbres 66 qui passent à l'intérieur des bras du carter 51 ; une couronne dentée 65 engrenée aux deuxièmes satellites 64 et solidaire de l'hélice, ou du propfan 12.

Selon un deuxième mode de réalisation de l'invention, les groupes turbopropulseurs double corps représentés schématiquement sur les figures 7 à 9 comportent un doublet d'hélices ou de propfan 70, 71, indépendantes, contrarotatives, à pas variable. La première hélice 70 est entraînée par le corps haute pression d'un générateur de gaz double corps, la deuxième hélice 71 est entraînée par le corps basse pression du générateur de gaz double corps.

Les structures des groupes turbopropulseurs représentés sur les figures 7 à 9 permettent de maintenir constante la vitesse de rotation des deux hélices sans risque de pompage des compresseurs même en l'absence de géométrie variable sur ces compresseurs.

Sur la figure 7 est représenté un exemple de groupe turbopropulseur, selon le deuxième mode de réalisation de l'invention, dans lequel la circulation et l'évolution des gaz sont les mêmes que celles décrites en liaison avec la figure 1 et les éléments identiques portent les mêmes références numériques que sur la figure 1.

La première hélice 70 est entraînée par le corps haute pression du générateur de gaz par l'intermédiaire d'un premier réducteur 72, la deuxième hélice 71 est entraînée par le corps basse pression du générateur de gaz par l'intermédiaire d'un deuxième réducteur 73. La turbine à haute pression 10 entraîne, par l'intermédiaire de l'arbre 17 du corps haute pression, le compresseur à haute pression 8, la première hélice 70 par l'intermédiaire du premier réducteur 72, ainsi que les équipements (non représentés) du moteur et de l'avion.

La turbine à basse pression 11 entraîne, par l'intermédiaire de l'arbre 18 du corps basse pression, le compresseur à basse pression 1 et la deuxième hélice 71 par l'intermédiaire du deuxième réducteur 73. Ce deuxième réducteur 73 doit être planétaire afin de permettre le passage des structures (non représentées) qui maintiennent les pièces fixes du premier réducteur 72 entraînant la première hélice 70.

La figure 8 représente une première variante d'exécution d'un groupe turbopropulseur selon le deuxième mode de réalisation de l'invention. Dans cette première variante, la circulation et l'évolution des gaz sont les mêmes que celles décrites en liaison avec la figure 2 et la structure se distingue de la structure représentée sur la figure 7 par la disposition géométrique du corps haute pression en amont du corps basse pression, par une entrée d'air 20 qui n'est pas annulaire mais située sous la nacelle du turbopropulseur et par le fait que la première hélice 70 est entraînée par l'intermédiaire du réducteur 72, par l'arbre basse pression 18, alors que la deuxième hélice 71 est entraînée, par l'intermédiaire du réducteur 73, par l'arbre haute pression 17.

Pour les mêmes raisons que celles exposées en liaison avec la figure 7 le deuxième réducteur 73 entraînant la deuxième hélice 71 doit être planétaire.

La figure 9 représente une deuxième variante d'exécution du deuxième mode réalisation de l'invention selon lequel l'architecture du groupe turbopropulseur comporte un doublet d'hélices 70, 71 contrarotatives à pas variable et un cheminement des gaz identique à celui décrit en liaison avec la figure 4, les hélices 70, 71 étant situées entre les compresseurs basse et haute pression 1, 8 et respectivement autour d'un premier et d'un deuxième réducteur de vitesse 90, 91. Les deux réducteurs de vitesse 90, 91 sont intégrés dans un carter annulaire 93 du générateur de gaz entre la sortie du compresseur basse pression 1 et l'entrée du compresseur haute pression 8. Les deux arbres 18,17 basse et haute pression sont contrarotatifs.

Les première et deuxième hélices 70, 71 sont respectivement entraînées par l'intermédiaire des premier et deuxième réducteurs de vitesse 90, 91, par les corps basse et haute pression. Les premier et deuxième réducteurs 90, 91 peuvent être du type décrit en liaison avec les figures 5a et 5b. Dans ce cas, les satellites du deuxième réducteur 91 sont placés derrière les satellites du premier réducteur 90 dans les mêmes bras du carter 93.

Les premier et deuxième réducteurs 90, 91 peuvent aussi être du type décrit en liaison avec la figure 6. Dans ce cas, les satellites du deuxième réducteur 91 peuvent être soit placés dans des bras différents du carter 93, soit placés dans les mêmes bras du carter 93. Lorsqu'ils sont placés dans les mêmes bras du carter, les satellites des deux réducteurs 90, 91 doivent être coaxiaux.

La figure 10 montre un exemple de réalisation de l'ensemble réducteur de vitesse dans lequel les deux réducteurs sont du type décrit en liaison avec la figure 6.

Les satellites doubles 102, 103 du deuxième réducteur 91 sont placés dans les mêmes bras du carter 93 et sont coaxiaux avec les satellites doubles 106, 107 du premier réducteur 90.

Le corps haute pression entraîne la première hélice 70 par l'intermédiaire des engrenages 101, 102, 103, 104 et le corps basse pression entraîne la deuxième hélice 71 par l'intermédiaire des engrenages 105, 106, 107, 108.
Selon un troisième mode de réalisation de l'invention, les groupes turbopropulseurs double corps représentés schématiquement sur les figures 11, 12, 15 comportent une hélice, ou un propfan, 12 à pas variable entraînée conjointement par les deux corps haute et basse pression d'un générateur de gaz double corps par l'intermédiaire d'un ensemble réducteur répartiteur de couple. Les structures des groupes turbopropulseurs représentées sur ces figures 11, 12, 15 permettent de maintenir constante la vitesse de rotation de l'hélice 12, ou du propfan, sans risque de pompage des compresseurs basse et haute pression même en l'absence de géométrie variable sur ces compresseurs à condition que la participation du corps haute pression à la puissance fournie par le groupe turbopropulseur soit importante. L'utilisation d'une géométrie variable sur les compresseurs permet cependant de maintenir constante la vitesse de rotation des corps basse et haute pression.

Sur la figure 11 est représenté un exemple de groupe turbopropulseur selon le troisième mode de réalisation de l'invention dans lequel le cheminement des gaz est le même que celui décrit en liaison avec la figure 1 et les éléments identiques portent les mêmes références numériques que sur la figure 1.

La turbine haute pression 10 entraîne le compresseur haute pression 8, les équipements (non représentés) du moteur et de l'avion, et participe à l'entraînement de l'hélice 12, ou du propfan, par l'intermédiaire d'un ensemble réducteur répartiteur de couple 110.

La turbine basse pression 11 entraîne le compresseur basse pression 1 et participe conjointement avec la turbine haute pression 10 à l'entraînement de l'hélice 12, ou du propfan, par l'intermédiaire de l'ensemble réducteur répartiteur de couple 110.

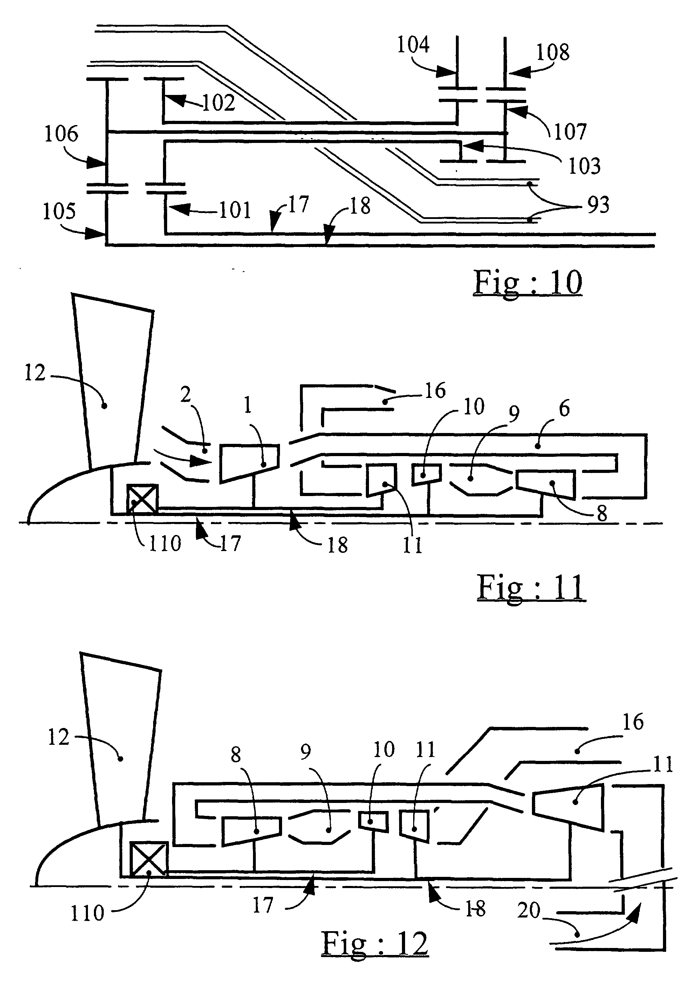

La figure 12 est une première variante d'exécution du troisième mode de réalisation de l'invention dans laquelle le cheminement des gaz est le même que celui décrit en liaison avec la figure 2 et se distingue de la structure représentée sur la figure 11 par la disposition géométrique du corps haute pression en amont du corps basse pression et par une entrée d'air 20 située sous la nacelle du turbopropulseur. Les rôles des corps basse et haute pression dans l'ensemble réducteur répartiteur de couple 110 sont permutés.

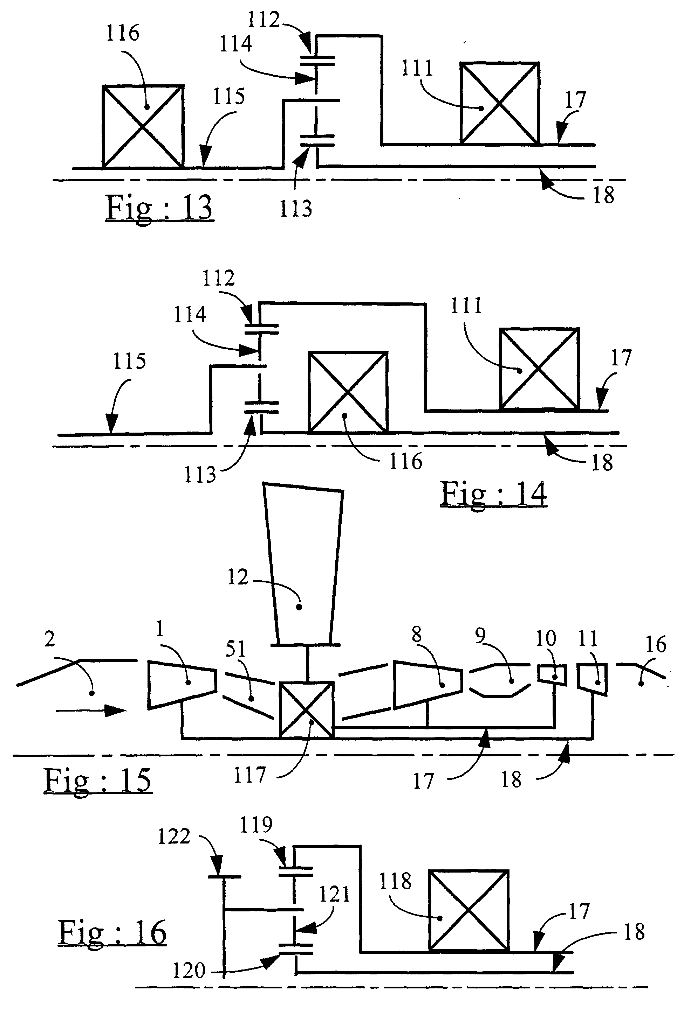

La figure 13 représente un exemple de réalisation d'un ensemble réducteur répartiteur de couple 110 pour le groupe turbopropulseur représenté sur la figure 12.

L'ensemble réducteur répartiteur de couple comporte un premier réducteur 111 entraîné en rotation par le corps haute pression du générateur de gaz du groupe turbopropulseur. Ce premier réducteur 111 entraîne en rotation une couronne dentée 112.
Le corps basse pression du générateur de gaz entraîne en rotation un planétaire 113.
La couronne dentée 112 et le planétaire 113 sont corotatifs et entraînent par l'intermédiaire des satellites 114, un arbre 115 qui entraîne, par l'intermédiaire d'un deuxième réducteur 116, l'hélice 12 ou le propfan.

Cet ensemble réducteur répartiteur de couple maintient dans un rapport constant les couples moteurs fournis par les corps haute et basse pression.

La figure 14 représente une variante d'exécution de l'ensemble réducteur répartiteur de couple pour le groupe turbopropulseur représenté sur la figure 12.

Dans cette variante, l'ensemble réducteur répartiteur de couple comporte un premier réducteur 111 entraîné en rotation par le corps haute pression du générateur de gaz.
Ce premier réducteur 111 entraîne en rotation une couronne dentée 112.
Le corps basse pression entraîne, par l'intermédiaire d'un deuxième réducteur 116, un planétaire 113. La couronne dentée 112 et le planétaire 113 sont corotatifs et entraînent, par l'intermédiaire des satellites 114, un arbre 115 solidaire de l'hélice 12 ou de la soufflante.

La figure 15 représente une deuxième variante d'exécution d'un groupe turbopropulseur selon le troisième mode de réalisation de l'invention dans lequel le cheminement des gaz est le même que celui décrit en liaison avec la figure 4, l'hélice 12 étant située entre les compresseurs basse et haute pression 1, 8 et autour d'un ensemble réducteur répartiteur de couple 117.

L'ensemble réducteur répartiteur de couple 117 est intégré dans le carter annulaire 51 entre les compresseurs basse et haute pression 1, 8.

L'hélice 12, ou le propfan, est entraînée conjointement par les corps haute et basse pression par l'intermédiaire de l'ensemble réducteur répartiteur de couple 117.

La figure 16 représente un exemple de réalisation d'un ensemble réducteur répartiteur de couple pour le groupe turbopropulseur représenté sur la figure 15.

L'ensemble réducteur répartiteur de couple comporte un premier réducteur de vitesse 118 entraîné par le corps haute pression du générateur de gaz du groupe turbopropulseur et une couronne dentée 119 entraînée par le réducteur 118.

Le corps basse pression entraîne un planétaire 120. La couronne dentée 119 et le planétaire 120 sont corotatifs et entraînent par l'intermédiaire des satellites 121, un planétaire 122.

Le planétaire 122 entraîne l'hélice 12, ou le propfan, par l'intermédiaire d'un deuxième réducteur planétaire identique à celui décrit en liaison avec les figures 5a, 5b ou avec la figure 6.

Cet ensemble réducteur répartiteur de couple maintient dans un rapport constant les couples moteurs fournis par les deux corps haute et basse pression du groupe turbopropulseur.

La présente invention n'est pas limitée aux exemples de réalisation précisément décrits, en particulier dans les cas représentés sur les figures 1, 2, 3, 4, 11, 12, 15, l'hélice peut être remplacée par un doublet d'hélices contrarotatives liées entre elles par une transmission mécanique appropriée ou par tout autre récepteur tel qu'un rotor d'hélicoptère par exemple.

De même, dans tous les exemples de réalisation, l'hélice du groupe turbopropulseur peut être remplacée par un propfan.

## Revendications

1. Groupe turbopropulseur double corps à régulation isodrome comportant un générateur de gaz double corps respectivement à basse et haute pression, et au moins une hélice, chaque corps comprenant un compresseur et une turbine entraînant ce compresseur, **caractérisé en ce que** l'hélice (12; 70, 71) est entraînée au moins par le corps haute pression du générateur de gaz.

2. Groupe turbopropulseur selon la revendication 1, **caractérisé en ce que** l'hélice (12; 70, 71) est à pas variable.

3. Groupe turbopropulseur selon l'une quelconque des revendications 1 ou 2, **caractérisé en ce que** l'hélice (12; 70, 71) est entraînée par l'intermédiaire d'un ensemble réducteur de vitesse (13; 72, 73).

4. Groupe turbopropulseur selon l'une quelconque des revendications 1 à 3, **caractérisé en ce que** l'hélice (12; 70, 71) est disposée à l'avant du groupe turbopropulseur et en amont du générateur de gaz.

5. Groupe turbopropulseur selon la revendication 3, **caractérisé en ce que** l'hélice (12; 70, 71) est disposée entre les compresseurs basse et haute pression (1, 8) du générateur de gaz et autour de l'ensemble réducteur de vitesse.

6. Groupe turbopropulseur selon la revendication 5, **caractérisé en ce que** l'ensemble réducteur de vitesse est de type planétaire.

7. Groupe turbopropulseur selon l'une quelconque des revendications 2 à 5, **caractérisé en ce que** l'hélice (12) est entraînée conjointement par les corps basse et haute pression du générateur de gaz, par l'intermédiaire d'un ensemble réducteur répartiteur de couple (110, 117).

8. Groupe turbopropulseur selon l'une quelconque des revendications 1 à 6, **caractérisé en ce qu'**il comporte une première et une deuxième hélices contrarotatives (70, 71) entraînées respectivement par les corps haute et basse pression du générateur de gaz double corps.

9. Groupe turbopropulseur selon la revendication 8, **caractérisé en ce que** les première et deuxième hélices contrarotatives (70, 71) sont respectivement entraînées par l'intermédiaire d'un premier et d'un deuxième ensembles réducteur de vitesse (90, 91), le deuxième ensemble réducteur de vitesse (91) étant de type planétaire.

10. Groupe turbopropulseur selon l'une quelconque des revendications précédentes, **caractérisé en ce que** l'hélice est une hélice rapide de type propfan.

## Patentansprüche

1. Zweiwellenturboproptriebwerk mit isodromischer Regelung, das einen Gasgenerator mit zwei Wellen, eine für Niederdruck und eine für Hochdruck, und mindestens einen Propeller aufweist, wobei jede Welle einen Kompressor und eine den Kompressor antreibende Turbine aufweist, **dadurch gekennzeichnet, dass** der Propeller (12; 70, 71) wenigstens von der Hochdruckwelle des Gasgenerators angetrieben ist.

2. Zweiwellenturboproptriebwerk nach Anspruch 1, **dadurch gekennzeichnet, dass** der Propeller (12; 70, 71) schrittweise variabel ist.

3. Zweiwellenturboproptriebwerk nach Anspruch 1 oder 2, **dadurch gekennzeichnet, dass** der Propeller durch eine Drehzahlmindererkonstruktion (13; 72, 73) angetrieben ist.

4. Zweiwellenturboproptriebwerk nach einem der Ansprüche 1 bis 3, **dadurch gekennzeichnet, dass** der Propeller (12; 70, 71) vor dem Turboproptriebwerk und stromauf des Gasgenerators angeordnet ist.

5. Zweiwellenturboproptriebwerk nach Anspruch 3, **dadurch gekennzeichnet, dass** der Propeller (12; 70, 71) zwischen dem Nieder- und Hochdruckkompressor (1, 8) des Gasgenerators und um die Drehzahlmindererkonstruktion herum angeordnet ist.

6. Zweiwellenturboproptriebwerk nach Anspruch 5, **dadurch gekennzeichnet, dass** die Drehzahlmindererkonstruktion eines Planetentyps ist.

7. Zweiwellenturboproptriebwerk nach einem der Ansprüche 2 bis 5, **dadurch gekennzeichnet, dass** der Propeller (12) durch eine Momentverteilerreduzierkonstruktion (110, 117) von der Nieder- und Hochdruckwelle des Gasgenerators gemeinsam angetrieben ist.

8. Zweiwellenturboproptriebwerk nach einem der Ansprüche 1 bis 6, **gekennzeichnet durch** einen ersten und zweiten Propeller (70, 71), die von der Hoch- bzw. Niederdruckwelle des Zweiwellengasgenerators gegenläufig angetrieben sind.

9. Zweiwellenturboproptriebwerk nach Anspruch 8, **dadurch gekennzeichnet, dass** der erste und zweite Propeller (70, 71), durch eine erste bzw. zweite Drehzahlmindererkonstruktion (90, 91) gegenläufig angetrieben sind, wobei die zweite.Drehzahlmindererkonstruktion eines Planetentyps ist.

10. Zweiwellenturboproptriebwerk nach einem der vorhergehenden Ansprüche, **dadurch gekennzeichnet, dass** der Propeller ein Schnellpropeller eines Propfantyps ist.

## Claims

1. Two-spool turboprop with isodromic regulation comprising a two-spool gas generator, these spools being one low-pressure spool and one high-pressure spool, and at least one propeller, each spool comprising a compressor and a turbine driving this compressor, **characterized in that** the propeller (12; 70, 71) is driven at least by the high-pressure spool of the gas generator.

2. Turboprop according to Claim 1, **characterized in that** the propeller (12; 70, 71) is a variable-pitch propeller.

3. Turboprop according to either one of Claims 1 or 2, **characterized in that** the propeller (12; 70, 71) is driven via a reduction gearbox assembly (13; 72, 73).

4. Turboprop according to any one of Claims 1 to 3, **characterized in that** the propeller (12; 70, 71) is arranged at the front of the turboprop and upstream of the gas generator.

5. Turboprop according to Claim 3, **characterized in that** the propeller (12; 70, 71) is arranged between the low-pressure and high-pressure compressors (1, 8) of the gas generator and around the reduction gearbox assembly.

6. Turboprop according to Claim 5, **characterized in that** the reduction gearbox assembly is of the planetary type.

7. Turboprop according to any one of Claims 2 to 5, **characterized in that** the propeller (12) is driven jointly by the low-pressure and high-pressure spools of the gas generator, via a torque-splitting reduction gearbox assembly (110, 117).

8. Turboprop according to any one of Claims 1 to 6, **characterized in that** it has a first propeller and second propeller (70, 71) which are contrarotating and driven respectively by the high-pressure and low-pressure spools of the two-spool gas generator.

9. Turboprop according to Claim 8, **characterized in that** the contrarotating first and second propellers (70, 71) are driven respectively via a first and a second reduction gearbox assembly (90, 91), the second reduction gearbox assembly (91) being of the planetary type.

10. Turboprop according to any one of the preceding claims, **characterized in that** the propeller is a high speed propeller of the propfan type.
